# EUROPEAN PATENT SPECIFICATION

(11) **EP 0 394 694 B1**
(45) Date of publication and mention of the grant of the patent: **09.11.1994**
(21) Application number: 90106000.4
(22) Date of filing: 29.03.1990
(51) Int. Cl.: B23Q 3/00, B24B 45/00

(54) **Hydraulic fixing device**
Hydraulische Einspannvorrichtung
Dispositif de fixation hydraulique

(30) Priority: 31.03.1989 JP 37868/89
(43) Date of publication of application: 31.10.1990
(73) Proprietor: MITSUBISHI MATERIALS CORPORATION, Chiyoda-ku Tokyo (JP)
(72) Inventor: Kobayashi, Tatsunori, c/o Gifu-Seisakusho, Yokoi Goudo-cho Anpachi-gun Gifu-ken (JP); Inoue, Masayuki, c/o Gifu-Seisakusho, Mitsubishi, Goudo-cho, Anpachi-gun, Gifu-ken (JP); Hasegawa, Makoto, c/o Gifu-Seisakusho, Mitsubishi, Goudo-cho, Anpachi-gun, Gifu-ken (JP)
(74) Representative: Füchsle, Klaus, Dipl.-Ing.

(56) References cited:
- AT-B- 367 878
- DE-A- 1 913 481
- DE-A- 2 403 337
- DE-A- 3 422 000
- US-A- 4 093 052

## Description

The present invention relates to the improvements in a flange utilized to securely fix a tool, such as a grinding wheel or a rotary knife, to a rotary shaft.

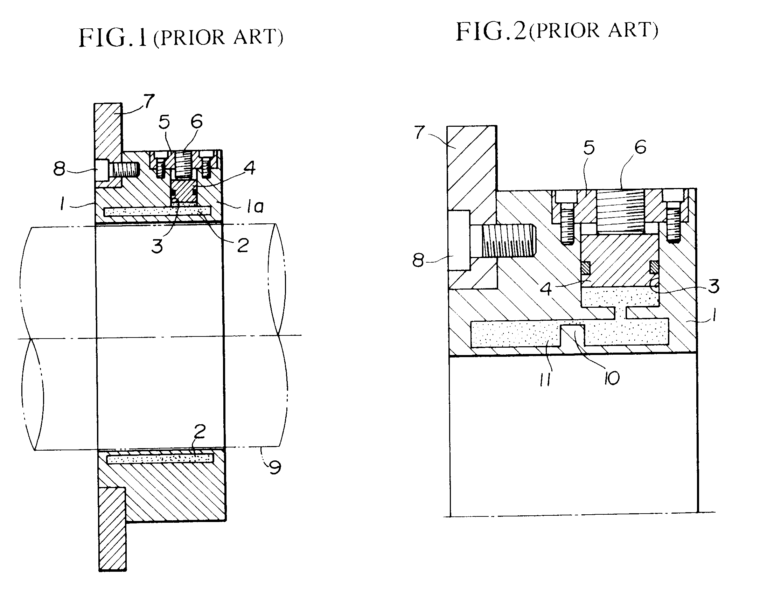

Fig. 1 depicts a conventional flange of the aforesaid type, which includes a flange body 1 having a flange portion 1a at one end thereof and having a pressure oil chamber 2 formed in the flange body 1 so as to be disposed adjacent to the inner peripheral surface of the flange body 1 and extending along the entire circumference thereof. Formed in the flange body 1 is a radially extending bore 3 which opens at the outer end to the outer peripheral surface thereof and is communicated at the inner end with the pressure oil chamber 2. A piston 4 is sealingly fitted in the bore 3 for sliding movement therealong, and an end member 5 is securely fixed to an opening end of the bore 3. A screw member 6 is threadedly engaged with an internally threaded aperture of the end member 5 to press the piston 4 radially inwardly of the flange body 1. A rotary knife 7 is first fixed to the flange portion 1a by means of bolts 8, and then the flange body 1 is fitted on a rotary shaft 9. Subsequently, the screw member 5 is tightened to cause the piston 4 to move radially inwardly of the flange body 1, and thus an operating oil is pressurized into the pressure oil chamber 2 to cause the wall portion between the pressure oil chamber 2 and the inner peripheral surface of the flange body 1 to protrude radially inwardly, whereby the flange body 1 is securely fixed to the shaft 9.

Fig. 2 depicts another conventional flange which includes a radially and outwardly-protruding portion 10 formed on the wall portion between a pressure oil chamber 11 and the inner peripheral surface of the flange body 1, in order to enhance the strength of the wall portion.

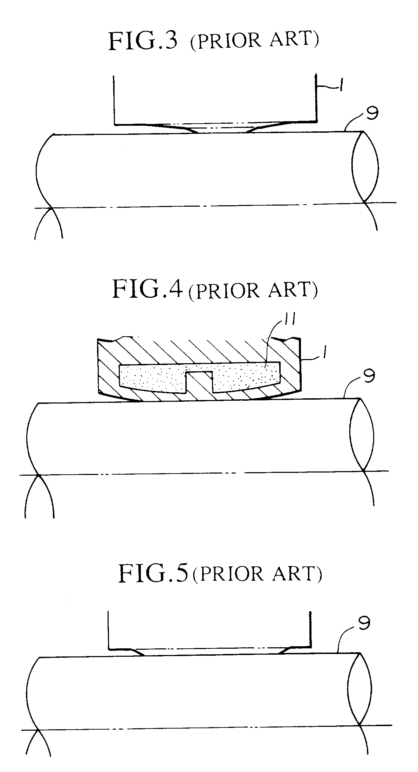

In both of the conventional flanges described above, however, when the operating oil is supplied into the pressure oil chamber 2 or 11, the wall of the pressure oil chamber 2 or 11 is caused to deform radially inwardly into a hump-shaped form as illustrated in Figs. 3 and 4. As a result, the machining edge of the tool is poorly aligned with the rotational axis, i.e., the axial runout of the side face is increased. In order to avoid these shortcomings, there has been developed a flange as shown in Fig. 5, which has an inner peripheral surface tapering toward the opposite ends so that when the operating oil is supplied into the pressure oil chamber, the wall portion between the chamber and the inner peripheral surface of the flange body deforms into a cylindrical shape to be brought into contact with the surface of the outer periphery of the shaft 6. However, in this flange, the width must be made greater in order to avoid the aforesaid shortcomings. Furthermore, the short-comings cannot be sufficiently avoided due to the variations in shaft diameter or manufacturing errors of flanges in the case where a plurality of flanges are utilized in series.

A flange apparatus according to the preamble of claim 1 and comprising two axially spaced pressure oil chambers is known from DE-C- 745 845.

It is the object of the present invention to provide a flange by which a tool such as a rotary knife can be securely fixed to a rotary shaft with a sufficiently high precision without increasing the width of the flange.

This object is solved according to the present invention by a flange apparatus including the features of claim 1.
Fig. 1 is a cross-sectional view of a conventional flange for securely fixing a tool to a rotary shaft;
Fig. 2 is an enlarged cross-sectional view of another conventional flange;
Figs. 3 and 4 are schematic views showing the states in which the conventional flanges are utilized, respectively;
Fig. 5 is a view similar to Fig. 3, but showing the state in which another conventional flange is being utilized;
Fig. 6 is an enlarged cross-sectional view of the basic structure of a flange for securely fixing a tool suitable for the present invention; and
Figs. 7 and 8 are schematic cross-sectional views showing the states in which the flange of Fig. 6 is being used;
Fig. 9 is a schematic cross-sectional view of a modified flange;
Fig. 10 is a view similar to Fig. 9, but showing the flange in accordance with the invention; and
Fig. 11 is a schematic cross-sectional view showing a further modified flange.

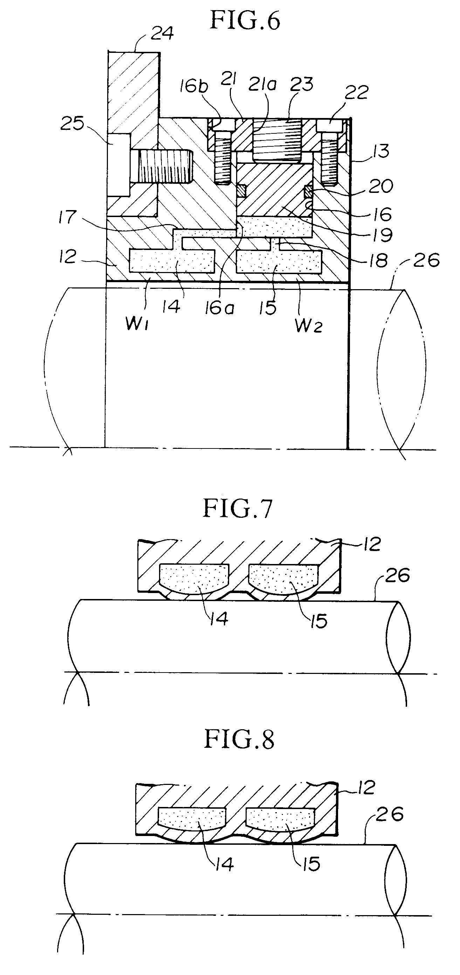

Fig. 6 depicts the basic structure of a flange for fixing tools suitable for the present invention, and comprises a cylindrical flange body 12 having inner and outer peripheral surfaces and including a flange portion 13 formed at one end thereof and having a diameter greater than that of the other end. A pair of forward and rearward pressure oil chambers 14 and 15 which hold an operating oil therein are formed in the flange body 12 in axially spaced relation to each other. Each of the pressure oil chambers 14 and 15 is disposed adjacent to the inner peripheral surface of the flange body 12, and each is formed so as to extend along the entire circumference thereof, whereby an annular wall portion W₁ or W₂, of a uniform thickness, is defined between the inner peripheral surface and the pressure oil chamber 14 or 15. In addition, there is provided pressure oil supply means, comprised of a single pressure oil supply unit and a plurality of oil passageways to connect the supply unit to the pressure oil chambers, respectively, for supplying the pressure oil chambers 14 and 15 with a pressurized operating oil. More specifically, the flange portion 13 of the flange body 12 has a radially extending bore 16 which opens at the outer end to the outer peripheral surface of the flange portion 13 and is communicated at the inner end with both of the pressure oil chambers 14 and 15 through oil passageways 17 and 18, respectively. The bore 16 has an inner portion to define a cylinder portion 16a and an outer opening end portion 16b having a greater diameter than the inner portion. A piston 19 with an O-ring 20 wound therearound is sealingly fitted in the cylinder portion 16a for sliding movement therealong, and an end member 21, which has an internally threaded aperture 21a formed therethrough, is securely fixed to the opening end portion 16b by means of bolts 22. A pressing member in the form of a screw 23 is threadedly engaged with the aperture 21a of the end member 21 with its forward end held in contact with the outer end face of the piston 19.

A tool 24, such as a rotary knife, is fixedly secured to the forward end face of the flange portion 13 by means of fastening bolts 25 threaded through the tool 24 into the flange portion 13. For fixing this flange to a rotary shaft 26, the flange is first fitted on a predetermined portion of the shaft 26. Then, the screw 23 is tightened to cause the piston 19 to move radially inwardly of the flange body 12. Thus, the operating oil is pressurized into the pressure oil chambers 14 and 15 to exert pressure on the rotary shaft 26 to securely fix the flange to the shaft 26.

In the foregoing, when the operating oil is pressurized, the two wall portions W₁ and W₂ between the pressure oil chambers 14 and 15 and the inner peripheral surface of the flange body 12 are caused to protrude radially inwardly of the flange body 12 and deform into hump-shaped forms, respectively, as illustrated in Fig. 7. Thus, the inner peripheral surface of the flange body 12 is brought into abutting engagement with the outer peripheral surface of the rotary shaft 26 at two positions which are spaced from each other in an axial direction with respect to the flange body 12. Therefore, the tool 24, such as a rotary knife, can be securely fixed to the shaft 26 with high precision without causing any errors in alignment of the machining edges or the face of the tool with the rotational axis.

Furthermore, as illustrated in Fig. 8, even in a case where the clearance between the rotary shaft 26 and the flange body 12 is large due to manufacturing errors of the shaft 26 or the flange body 12, the wall portions W₁ and W₂ of the flange body 12 can be held in abutting engagement with the shaft 26 at two positions. Therefore, the flange body 12 can be securely fixed to the rotary shaft 26 in a stable manner no matter how great the clearance is. Furthermore, the flange body 12 is not the one which requires a long cylindrical wall portion to be held in engagement with the rotary shaft, but the one which requires two wall portions spaced axially from each other. Hence, the width of the flange can be reduced sufficiently by making each wall portion short enough, and the flange of a short total width can be successfully utilized to securely fix the tool 24 to the rotary shaft 26 without causing any runout in the radial and axial directions of the tool.

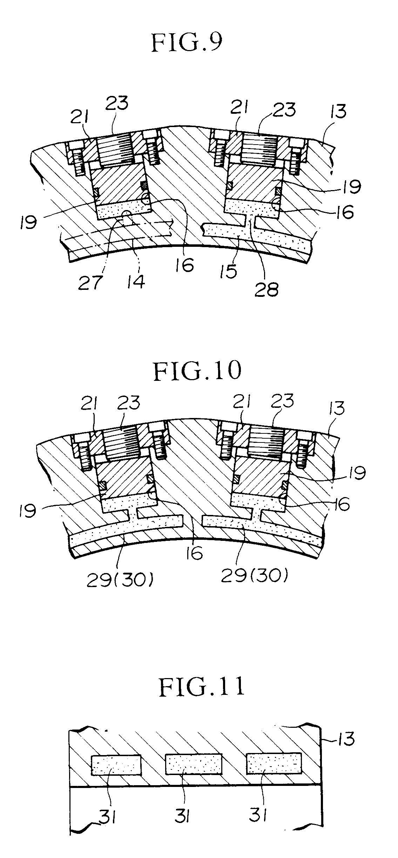

Fig. 9 depicts a modified flange which differs from the previous embodiment in that two oil supply units are disposed in circumferentially spaced relation to each other to supply the pressure oil chambers 14 and 15 with the operating oil, respectively. Each oil supply unit is of a construction similar to the aforesaid unit, and hence its detailed explanation will be omitted by indicating like or similar parts with the same reference numerals. The cylinder portion of one of the oil supply units is communicated with the forward pressure oil chamber 14 through an oil passageway 27 while the cylinder portion of the other oil supply unit is communicated with the rearward pressure oil chamber 15 through an oil passageway 28. With this construction, the oil pressure in the forward pressure oil chamber 14 and that in the rearward pressure oil chamber 15 can be independently controlled to optimal values, and hence a subtle adjustment of the alignment of the tool machining edge with the rotational axis can be carried out.

Fig. 10 shows a flange in accordance with the present invention. In this embodiment, each pressure oil chamber 14 or 15 is comprised of a plurality of circumferentially extending arcuate chambers 29 or 30 spaced in circumferentially equally spaced relation to one another, and a plurality of oil supply units, each provided so as to correspond to a respective arcuate chambers 29 or 30. With this construction, the axial and radial alignments of the tool, i.e., the alignment of the machining edge with the rotational axis and the eccentricity of the tool, can be optimally carried out by adjusting the suitable oil supply units selectively.

Furthermore, in the first embodiment, instead of the oil passageway 17, another oil passageway connecting the two pressure oil chambers may be provided. In addition, in the embodiment of the invention shown in Fig. 10, the plurality of oil supply units provided for each group of arcuate chambers may be replaced by a single oil supply unit. Moreover, as illustrated in Fig. 11, there may be provided three or more pressure oil chambers 31 spaced axially of the flange body 13, and the number of the other parts or bores may be increased to comply with such a construction.

## Claims

1. A flange apparatus for securely fixing an annular tool to a rotary shaft (26) in coaxial relation to each other comprising:
- a cylindrical flange body (12) to which said annular tool is fixedly secured, said flange body (12) including inner and outer peripheral surfaces and a pressure oil chamber extending circumferentially to the flange body and disposed adjacent to the inner peripheral surface of the flange body; and
- oil supply means for supplying the presure oil chamber with a pressurized oil, said oil supply means including an oil supply unit having a bore (16) formed in said flange body (12) so as to open to the outer peripheral surface thereof, a piston (19) fitted sealingly in said bore for sliding therein and pressurizing said oil, a pressing member (23) disposed within said bore (16) for causing said piston (19) to move in said bore, and oil passageway means (17) for communicating said bore with said pressure oil chamber, wherein
- said flange body (12) includes a plurality of said pressure oil chambers (14, 15; 29, 30; 31) disposed in axially spaced relation to one another, the radially extending side walls of said pressure oil chambers serving to support the inner annular surface of said flange body against radial deflection at three or more axially spaced locations; and
- said oil passageway means (17) includes a plurality of oil passageways formed in said flange body (12) so as to communicate said bore 16 with said plurality of pressure oil chambers (14, 15; 29, 30; 31), respectively, whereby when said flange body is fitted onto the shaft (26), said flange body (12) is pressed against said shaft by wall portions of said flange body extending between said axially spaced locations being held in abutting engagement with the outer peripheral surface of said shaft (26),
**characterized in that**
each of said oil chambers (14, 15; 29, 30; 31) includes a plurality of hydraulically independent circumferentially extending arcuate chambers spaced circumferentially relative to each other.

2. A flange apparatus as recited in claim 1, wherein said oil supply means includes a plurality of said oil supply units.

## Patentansprüche

1. Flanscheinrichtung zum sicheren Befestigen eines ringförmigen Werkzeugs an einem Drehschaft (26) in koaxialem Verhältnis zueinander, mit:
- einem zylindrischen Flanschkörper (12), an dem das ringförmige Werkzeug sicher befestigt ist, wobei der Flanschkörper (12) innere und äußere Umfangsoberflächen und eine Druckölkammer beinhaltet, die sich umfangsmäßig zu dem Flanschkörper erstreckt und benachbart zu der inneren Umfangsoberfläche des Flanschkörpers angeordnet ist; und
- einem Ölversorgungsmittel zum Versorgen der Druckölkammer mit einem unter Druck gesetzten Öl, wobei das Ölversorgungsmittel eine Ölversorgungseinheit beinhaltet, die eine in dem Flanschkörper (12) eingeformte Bohrung aufweist, so daß sie sich zu der äußeren Umfangsoberfläche hiervon öffnet, ein Kolben (19) abgedichtet in der Bohrung eingepaßt ist, um darin zu gleiten und das Öl unter Druck zu setzen, ein Druckelement (23), das in der Bohrung (16) angeordnet ist, um zu veranlassen, daß der Kolben (19) in der Bohrung sich bewegt, und Öldurchlaßmittel (17) zum Verbinden der Bohrung mit der Druckölkammer, worin
- der Flanschkörper (12) eine Anzahl von den Druckölkammern (14, 15; 29, 30; 31) beinhaltet, die in axial beabstandetem Verhältnis zueinander angeordnet sind, wobei die sich radial erstreckenden Seitenwände der Druckölkammern dazu dienen, die innere ringförmige Oberfläche des Flanschkörpers gegen radiale Durchbiegung an drei oder mehr axial beabstandeten Stellen zu unterstützen; und
- das Öldurchlaßmittel (17) beinhaltet eine Anzahl von Öldurchlaßpfaden, die in dem Flanschkörper (12) derart eingeformt sind, daß die Bohrung (16) mit der Anzahl von Druckölkammern (14, 15; 29, 30; 31) jeweils miteinander in Verbindung setzt, wodurch, wenn der Flanschkörper auf dem Schaft (26) aufgepaßt ist, der Flanschkörper (12) gegen den Schaft durch Wandabschnitte des Flanschkörpers gedrückt wird, die sich zwischen den axial beabstandeten Stellen erstrecken, die mit der äußeren Umfangsoberfläche des Schafts (26) durch anstoßendem Anliegen gehalten werden,
dadurch **gekennzeichnet,** daß
jede der Ölkammern (14, 15; 29, 30; 31) eine Anzahl von hydraulisch unabhängig umfänglich sich erstreckenden bogenförmigen Kammern beinhaltet, die umfänglich relativ zueinander beabstandet sind.

2. Flanscheinheit nach Anspruch 1, in der das Ölversorgungsmittel eine Anzahl von den Öldversorgungseinheiten beinhaltet.

## Revendications

1. Dispositif de fixation à bride pour fixer de manière sûre un outil annulaire à un arbre rotatif (26) en relation coaxiale l'un par rapport à l'autre comprenant :
- un corps de bride cylindrique (12) auquel ledit outil annulaire est fixé de manière sûre, ledit corps de bride (12) comportant des surfaces périphériques internes et externes et une chambre d'huile sous pression s'étendant circonférentiellement vers le corps de la bride et disposée contiguë à la surface périphérique interne du corps de la bride, et
- un moyen d'alimentation en huile pour délivrer à la chambre d'huile sous pression de l'huile sous pression, ledit moyen d'alimentation en huile comportant une unité d'alimentation en huile ayant un alésage (16) formé dans ledit corps de la bride (12) de façon à s'ouvrir sur sa surface périphérique extérieure, un piston (19) adapté de manière étanche dans ledit alésage pour coulissement dans celui-ci et mise sous pression de ladite huile, un élément de pression (23) disposé à l'intérieur dudit alésage (16) pour amener ledit piston (19) à se déplacer dans ledit alésage et un moyen de passage d'huile (17) pour faire communiquer ledit alésage avec ladite chambre d'huile sous pression, dans lequel
- ledit corps de bride (12) comporte une pluralité desdites chambres d'huile sous pression (14, 15, 29, 30, 31) disposées en relation axialement espacées les unes par rapport aux autres, les parois latérales s'étendant radialement desdites chambres d'huile sous pression servant pour supporter la surface annulaire interne dudit corps de la bride contre la déviation radiale à trois ou plus emplacements axialement espacés, et
- ledit moyen de passage d'huile (17) comporte une pluralité de passages d'huile formés dans ledit corps de la bride (12) de façon à faire communiquer ledit alésage (16) avec ladite pluralité des chambres d'huile sous pression (14, 15, 29, 30, 31) respectivement, d'où il résulte que lorsque ledit corps de bride est adapté sur l'arbre (26), ledit corps de bride (12) est pressé contre ledit arbre par des parties de parois dudit corps de bride s'étendant entre les emplacements axialement espacés étant maintenu en contact de butée avec la surface périphérique extérieure dudit arbre (26),
caractérisé en ce que
chacune desdites chambres d'huile (14, 15, 29, 30, 31) comporte une pluralité de chambres hydrauliquement indépendantes en forme d'arc s'étendant circonférentiellement espacées circonférentiellement les unes par rapport aux autres.

2. Dispositif de fixation à bride selon la revendication 1, dans lequel ledit moyen d'alimentation en huile comporte une pluralité desdites unités d'alimentation en huile.
